Europäisches Patentamt

European Patent Office

Office européen des brevets

(11) Publication number: **0 039 460**
A2

(12) # EUROPEAN PATENT APPLICATION

(21) Application number: **81103126.9**

(22) Date of filing: **25.04.81**

(51) Int. Cl.³: **G 01 K 7/24**, G 01 K 13/00

(30) Priority: **28.04.80 JP 56552/80**

(43) Date of publication of application: **11.11.81**
**Bulletin 81/45**

(84) Designated Contracting States: **DE FR GB IT NL SE**

(71) Applicant: **KABUSHIKI KAISHA SHIBAURA DENSHI
SEISAKUSHO, No. 520, Oaza Machiya, Urawa-shi
Saitama-ken (JP)**

(72) Inventor: **Kitamura, Kenzo, No. 3-30-13, Asahi-cho,
Nerima-ku Tokyo (JP)**
Inventor: **Ebitani, Hideaki, No. 533-10, Nakagawa,
Omiya-shi Saitama-ken (JP)**
Inventor: **Masuzawa, Takeshi, No. 43-67, Toyama-cho,
Shinjuku-ku Tokyo (JP)**
Inventor: **Asakura, Masahiro, No. 510, Oaza Machiya,
Urawa-shi Saitama-ken (JP)**
Inventor: **Miura, Tetsuo, No. 3-684, Nisshin-cho,
Omiya-shi Saitama-ken (JP)**

(74) Representative: **Reichel, Wolfgang, Dipl.-Ing. et al,
Reichel und Reichel Parkstrasse 13, D-6000 Frankfurt
a.M. 1 (DE)**

(54) Electronic clinical thermometer.

(57) An electronic clinical thermometer which is provided with a bridge circuit (2) having a heat sensitive element (1) connected to at least one side thereof, first detecting means (3, 4) for detecting wheter or not the ratio of increase of a temperature signal from the bridge circuit (2) is higher than a certain value, and second detecting means (5) for detecting, based on the temperature signal from the bridge circuit (2), whether or not the temperature of the heat sensitive element (1) has reached a set temperature substantially equal to the bodily temperature. When it is detected by the first detecting means (3, 4) that the ratio of increase of the temperature signal has become higher than the certain value, the heat sensitive element (1) is made to be self-heated up to the set temperature substantially equal to the bodily temperature, by which the bodily temperature can be measured in a short time and with small power dissipation.

electronic clinical thermometer which has a bridge circuit having a heat sensitive element connected to at least one side thereof and detects one's temperature based on a temperature signal derived from the bridge circuit and corresponding to the temperature of the heat sensitive element, characterized by first detecting means for detecting whether or not the ratio of increase of a temperature signal from the bridge circuit is higher than a certain value; second detecting means for detecting, based on the temperature signal from the bridge circuit, whether or not the temperature of the heat sensitive element has reached a predetermined value substantially equal to the bodily temperature;and voltage control means for controlling a voltage to the bridge circuit in accordance with the results of detection by the first and second detecting means.

Embodiments of the invention and diagrams to illustrate the operation of the embodiments are subsequently described with reference to the drawings:

Fig. 1 is a block diagram illustrating an embodiment of the present invention;

Figs. 2A and 2B are explanatory of the operation of the embodiment depicted in Fig. 1;

Fig. 3 is a block diagram illustrating another embodiment of the present invention; and

Figs. 4A and 4B are explanatory of the operation of the embodiment shown in Fig. 3.

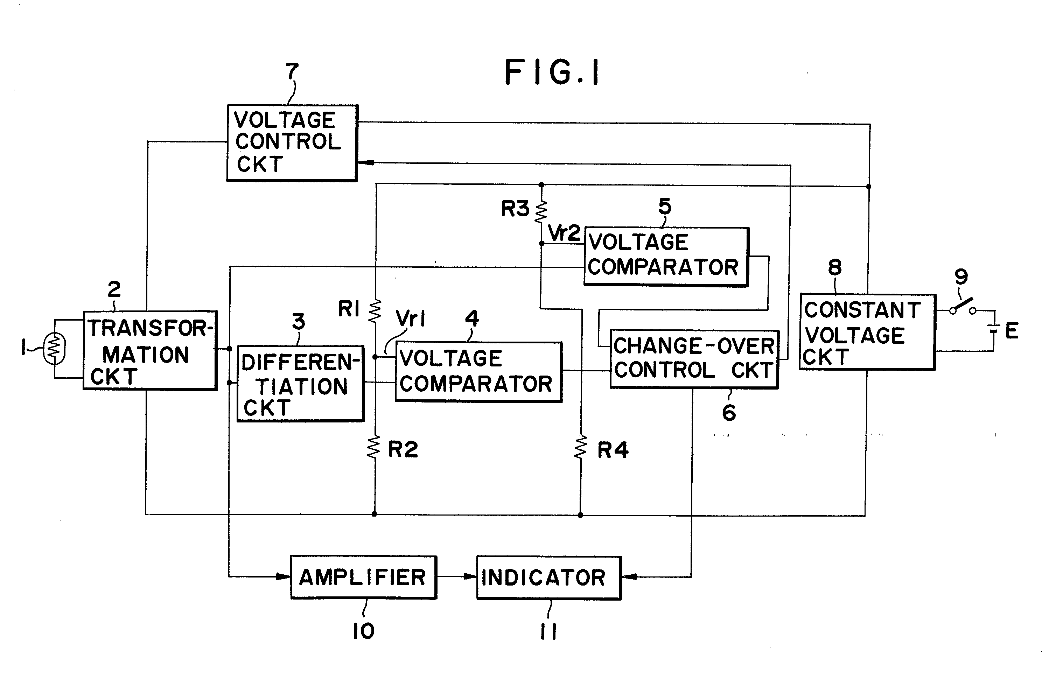

In Fig. 1 showing in block form an embodiment of the present invention, reference numeral 1 indicates a thermistor; 2 designates a transformation circuit;

Electronic clinical thermometer

The present invention relates to an electronic clinical thermometer which is capable of accurately detecting one's temperature in a short time and with small power consumption.

Electronic clinical thermometers that have heretofore been proposed for taking one's temperature through utilization of the temperature-resistance characteristic of a heat sensitive element such as a thermistor are divided into the type that preheats the heat sensitive element by a heater up to a certain temperature so as to reduce the overall time involved for measurement and the type predicts the temperature of an examinee from the results of measurement conducted for a fixed (short) period of time ("Electronics", September 27, 1971, p. 56-59).

However, the former consumes large power and the latter lacks in accuracy.

It is an object of the present invention to provide an electronic clinical thermometer with which it is possible to accurately take one's temperature in a short time.

Another object of the present invention is to provide an electronic clinical thermometer which is small in power consumption.

Yet another object of the present invention is to provide an electronic clinical thermometer with which it is possible to take one's temperature in a short time even if the temperature is high.

The problem underlying the invention is solved by an 3 identifies a differentiation circuit; 4 and 5 denote voltage comparators; 6 represents a change-over control circuit; 7 shows a voltage control circuit; 8 refers to a constant-voltage circuit; 9 indicates a power source switch; 10 designates an amplifier; 11 identifies an indicator; R1, R2, R3 and R4 denote resistors; and E shows a power source.

The transformation circuit 2 is formed by three sides of a bridge circuit, the remaining one side of which is formed by the thermistor 1, and the circuit 2 yields, as a temperature signal, a bridge unbalanced voltage corresponding to the temperature of the thermistor 1. The voltage comparator 4 compares a reference voltage Vr1 and the output from the differentiation circuit 3 and produces an output "1" while the latter is higher than the former. The voltage comparator 5 compares a reference voltage Vr2 corresponding to a predetermined temperature (which is assumed to be 35°C in the following description) substantially equal to the temperature of an examinee and the temperature signal from the transformation circuit 2 and yields an output "1" while the temperature signal is higher than the reference voltage Vr2.

The change-over control circuit 6 controls the voltage control circuit 7 and the indicator 11 in accordance with the signals from the voltage comparators 4 and 5. The operation of the circuit 6 is as follows: In the cases where the outputs from the voltage comparators 4 and 5 are both "0" and where the output from the voltage comparator 5 is "1", the circuit 6 produces an output "0", which is applied to the voltage control circuit 7; in the case where the outputs from the voltage comparators 4 and 5 are "1" and "0", respectively, the circuit 6 yields an output "1", which is provided to the voltage control circuit 7; and, at the moment of the signal from the voltage comparator 5 becoming "1", the circuit 6 applies a control signal to the indicator 11 to activate it. The circuit for such operations can easily be constituted using a flip-flop or the like.

The voltage control circuit 7 is designed so that when the output from the change-over control circuit 6 is "1" , it supplies the transformation circuit 2 with a voltage Vh which applies a current of about 2 mA to the thermistor 1 to put it in the self-heating state and that when the output from the change-over control circuit 6 is "0" and when the power source switch 9 is turned ON (namely, in the initial state), it supplies the transformation circuit 2 with a voltage V$\ell$ which provides to the thermistor 1 a current ( of approximately 50 uA, for instance) which does not make it self-heating.

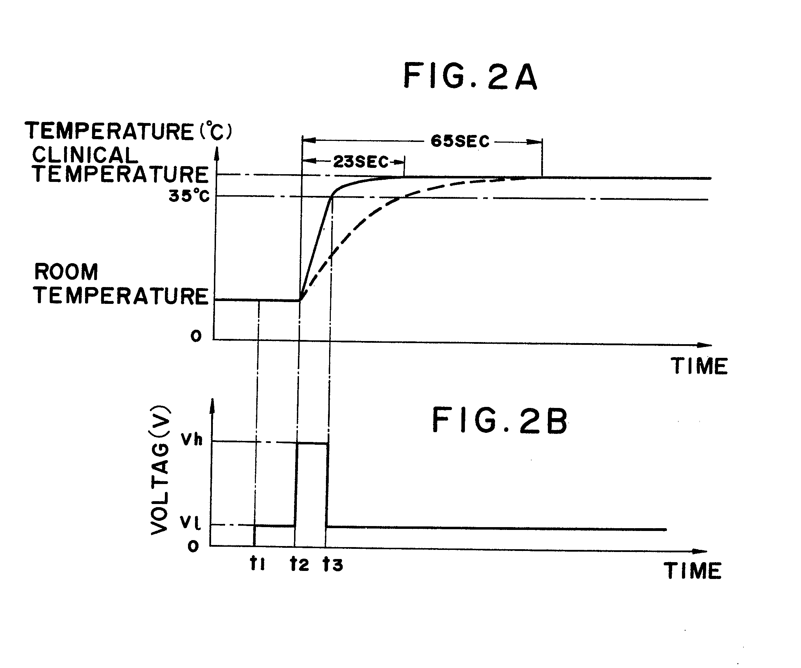

Figs. 2A and 2B are explanatory of the operation of the embodiment depicted in Fig. 1, Fig. 2A showing the temperature of the thermistor 1 and Fig. 2B the voltage which is applied to the transformation circuit 2. The broken line in Fig. 2A indicates the temperature of a thermistor in the prior art electronic clinical thermometer.

Turning ON the power source switch 9 at a moment t1, the voltage V$\ell$ is applied to the transformation circuit 2, as depicted in Fig. 2B. Since the voltage V$\ell$ does not put the thermistor 1 in its self-heating state as mentioned preciously, the thermistor 1 is held equal to room temperature until a moment t2 when to start taking the bodily temperature. Accordingly, the transformation circuit 2 provides the temperature signal corresponding to room temperature, which signal is applied to the differentiation circuit 3 and the voltage comparator 5, and also to the indicator 11 via the amplifier 10. Since the temperature signal provided in this while is substantially constant, the output from the differentiation circuit 3 is zero or very small and its level is lower than that of the reference voltage Vr1 applied to the voltage comparator 4. In consequence, the output from the voltage comparator 4 is "0" in the time interval between the moments t1 and t2. Assuming that the temperature of the thermistor 1, that is, room temperature is lower than 35°C as shown in Fig. 2A, the output from the voltage comparator 5 is "0". Consequently, the output from the change-over control circuit 6 to the voltage control circuit 7 also becomes "0", resulting in the voltage control circuit 7 providing the voltage Vℓ to the transformation circuit 2 in the time interval between the moments t1 and t2.

Next, upon starting to measure the bodily temperature at the moment t2, the thermistor 1 is warmed by the body heat of the examinee to cause an increase in the temperature signal which is provided from the trans - formation circuit 2. This raises the output from the differentiation circuit 3 higher than the reference voltage Vr1 being applied to the voltage comparator 4, so that its output becomes "1", causing the output from the change-over control circuit 6 to the voltage control circuit 7 to become "1".

Since the voltage control circuit 7 applies to the transformation circuit 2 such a voltage Vh that the thermistor 1 becomes self-heating when the output from the change-over control circuit 6 becomes "1", as described previously, the temperature of the thermistor 1 sharply rises, as depicted in Fig.2A, by which the temperature signal from the transformation circuit 2 is also abruptly increased. The voltage comparator 5 compares the temperature signal from the transformation circuit 2 and the reference voltage Vr2 and when the former becomes higher than the latter, that is, when the temperature of the thermistor 1 rises above $35^{\circ}C$, the comparator 5 yields and provides the output "1" to the change-over control circuit 6. As a result of this, the change-over control circuit 6 applies a control signal to the indicator 11 to cause it to start its indicating operation and, at the same time, alters the output to the voltage control circuit 7 to "0". When the output from the change-over control circuit 6 becomes "0", the voltage control circuit 7 switches the voltage to the transformation circuit 2 from Vh to Vℓ , as shown in Fig. 2B, stopping the self-heating of the thermistor 1.  Consequently, after the moment t3 of stopping the thermistor 1 from self-heating, a temperature signal corresponding to the temperature of the thermistor 1 warmed by the bodily temperature is outputted from the transformation circuit 2 and this temperature signal is provided via the amplifier 10 to the indicator 11 to indicate thereon the bodily temperature.

As described above, in this embodiment, the low voltage Vℓ is applied to the transformation circuit 2 in the time interval from the moment of turning ON of the power switch 9 to the moment of starting the measurement of the bodily temperature and the indicator 11 is activated after the temperature of the thermistor 1 becomes higher than $35^{\circ}C$; therefore, this embodiment has the advantage of no waste of power dissipation. As shown in Fig. 2A, the time required for obtaining an accurate bodily temperature after starting the measurement was 23 sec. in the case of the electronic clinical thermometer of this embodiment and 65 sec. in the case of a conventional electronic clinical thermometer of the type that the thermistor is not self-heated.

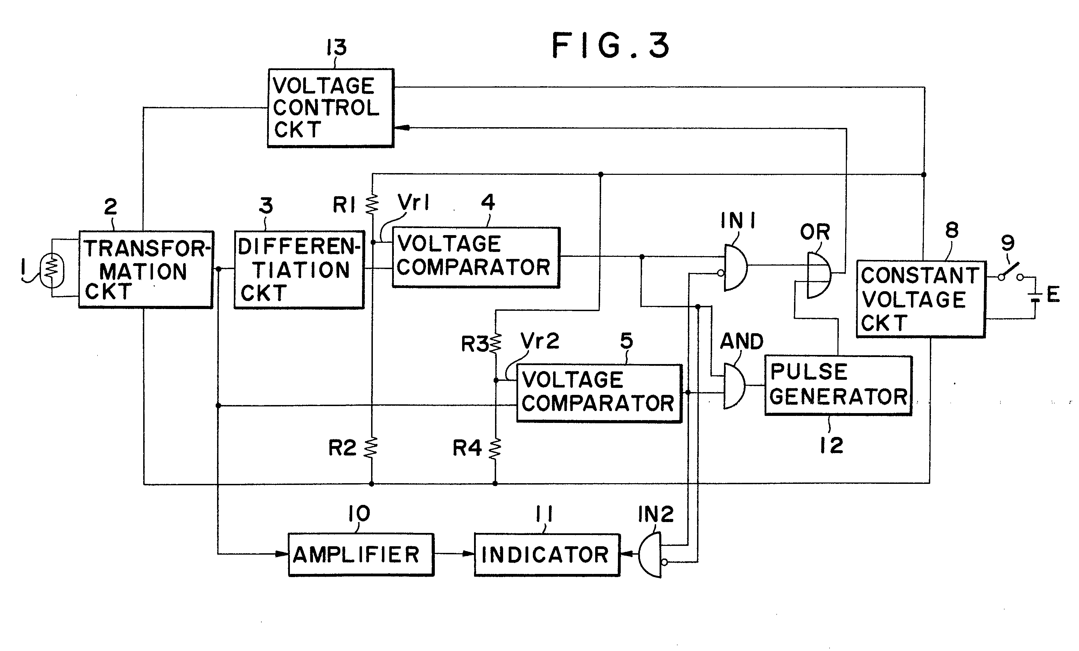

Fig. 3 illustrates in block form another embodiment of the present invention. Reference numeral 12 indicates a pulse generator; 13 designates a voltage control circuit; AND identifies an AND gate; OR denotes an OR gate; and IN1 and IN2 represent inhibit gates. The other reference numerals corresponding to those in Fig. 1 indicate the same parts. The pulse generator 12 is to generate pulses of small pulse width at fixed intervals while the output from the AND gate AND is "1". The voltage control circuit 13 is to apply to the transformation circuit 2 the voltage Vh which puts the thermistor 1 in its self-heating state or the voltage $V\ell$ which does not put the thermistor 1 in such a state, depending on whether the output from the OR gate OR is "1" or "0".

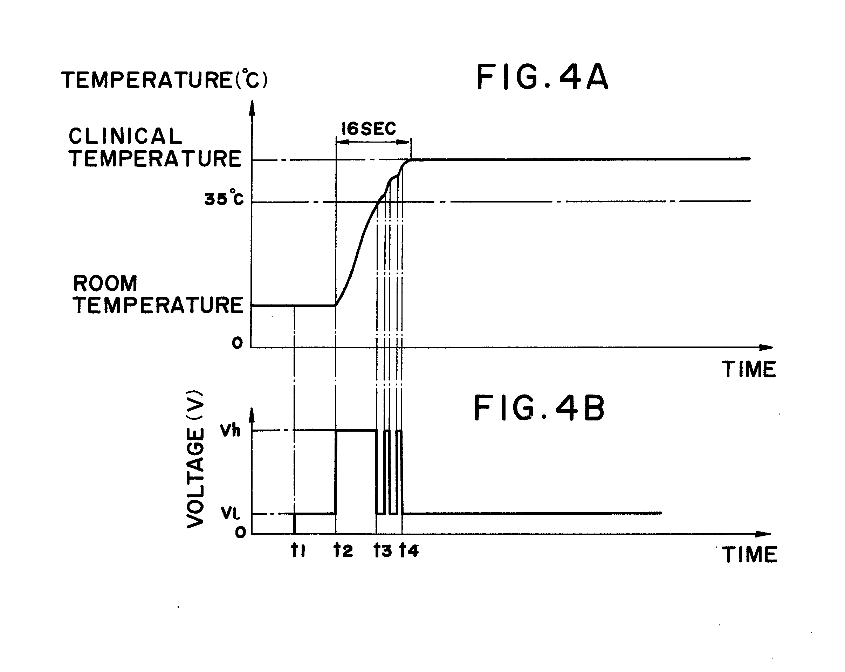

Figs. 4A and 4B are explanatory of the operation of the embodiment depicted in Fig. 3, Fig. 4A showing the temperature of the thermistor 1 and Fig. 4B the voltage which is supplied to the transformation circuit 2.

Turning ON the power source switch 9 at the moment t1, the transformation circuit 2 is supplied with the voltage $V\ell$ which does not cause the thermistor 1 to become self-heating, by which, as shown in Fig.4B, the transformation circuit 2 yields the temperature signal corresponding to room temperature signal corresponding to room temperature until the moment t2 when measurement of the bodily temperature is started, the temperature signal being provided to the differentiation circuit 3 and the voltage comparator 5, and also to the indicator 11 via the amplifier 10, as described previously in conjunction with the foregoing embodiment. The output derived from the differentiation circuit 3 in this time interval between the moments t1 and t2 is substantially zero and lower than the reference voltage Vr1, as mentioned previously, so that the output from the voltage comparator 5 is "0", assuming that the temperature of the thermistor 1, that is, room temperature is lower than $35^{o}C$, as depicted in Fig. 4A.

Accordingly, the outputs from inhibit gates IN1 and IN2 and the AND gate AND are all "0". Since the pulse generator 12 produces pulses of small width at regular intervals only while the output from the AND gate AND is "1", as referred to previously, the output from the pulse generator 12 is "0" in the time interval from the moment t1 to t2. Consequently, in the time interval between the moments t1 and t2, the output from the OR gate OR is "0", so that the voltage control circuit 13 supplies the transformation circuit 2 with the voltage V₂ which does not make the thermistor 1 self-heating.

Upon starting the measurement of the bodily temperature at the moment t2, the thermistor 1 is warmed by the body heat of the examinee to increase the temperature signal from the transformation circuit 2, by which the output from the differentiation circuit 3 is raised higher than the reference voltage Vr1 being applied to the voltage comparator 4 and the output therefrom becomes "1". The output from the voltage comparator 5 is held at "0" until the moment t3 when the temperature of the thermistor 1 reaches $35^{o}C$, assuming that the reference voltage Vr2 corresponds to 35°C as in the
foregoing embodiment.

Accordingly, in the time interval from the moment t2
to t3, the outputs from the AND gate AND and the inhibit gate IN2 are both "0" and the output from the
inhibit gate IN1 is "1". By the output "1" from the
inhibit gate IN1, the output from the OR gate OR is
altered to "1", by which the voltage control circuit
13 is caused to apply the voltage Vh to the transformation circuit 2, making the thermistor 1 self-
heating. As a result of this, the temperature of the
thermistor 1 abruptly rises, as depicted in Fig.4A,
and consequently the temperature signal from the
transformation circuit 2 also rapidly increases.

When the level of the temperature signal reaches, at
the moment t3, the reference voltage Vr2 of the voltage comparator 5 corresponding to 35°C, the voltage
comparator 5 yields the output "1" to inhibit the
inhibit gate IN1. At this time, if the output from
the voltage comparator 4 is "1", that is, if the
ratio of increase of the temperature signal is higher
than a fixed value even after the temperature of the
thermistor 1 has reached 35°C, the AND gate AND produces the output "1" to activate the pulse generator
12. And if the output from the voltage comparator 4
is "0", the inhibit gate IN2 provides the output "1"
to start the operation of the indicator 11.

Accordingly, even if the temperature of the thermistor 1 exceeds 35°C, when the ratio of increase of
the temperature signal is higher than the fixed value,
the pulse generator 12 applies pulses of small pulse
width to the voltage control circuit 13 via the OR
gate OR at regular intervals and, as shown in Fig.4B,
the voltage control circuit 13, while being supplied

0039460

with the pulses, provides the voltage Vh to the transformation circuit 2 to put the thermistor 1 in its self-heating state, thereby making the temperature of the thermistor 1 quickly approach the temperature of the examinee. As the temperature of the thermistor 1 approaches the bodily temperature, the ratio of increase of the temperature signal which is provided from the transformation circuit 2 in the time interval between the pulses gradually decreases. When the ratio of increase becomes lower than a certain value, the voltage comparator 4 yields the output "O" to make the output from the AND gate AND "O", by which the pulse generator 12 is stopped from operation. Consequently, after the moment t4 of stopping the operation of the pulse generator 12, the transformation circuit 2 provides the temperature signal corresponding to the temperature of the thermistor 1 warmed by the body heat of the examinee. The temperature signal is applied via the amplifier 10 to the indicator 11 for indication thereon.

As described above, in this embodiment, even if the temperature of the thermistor 1 exceeds $35^{\circ}C$, when the ratio of increase of the temperature signal is higher than a certain value, the voltage Vh which makes the thermistor 1 self-heating is applied pulse-wise to the transformation circuit 2; therefore, even if the bodily temperature is as high as, for example, 39 to $40^{\circ}C$, time can be taken in a short time compared to the case of the embodiment depicted in Fig.1. The time for obtaining an accurate body temperature was 16 sec. after starting the measurement.

As has been described in the foregoing, the electronic clinical thermometer of the present invention is provided with first detecting means which is formed by the differentiation circuit 3 and the voltage comparator 4 and detects whether or not the ratio of increase of the temperature signal from a bridge circuit constituted by the thermistor 1 and the transformation circuit 2 is higher than a certain value; second detecting means which is formed by the voltage comparator 5 and the detects from the temperature signal whether or not the temperature of the thermistor 1 is higher than a predetermined value substantially equal to the temperature of the examinee; and voltage control means which is formed by the change-over control circuit 6 and the voltage control circuit 7 and supplies the bridge circuit with such a voltage that makes the thermistor 1 self-heating only when the temperature of the thermistor 1 is lower than the predetermined value substantially equal to the body temperature and the ratio of increase of the temperature signal is higher than the certain value. Accordingly, a low voltage is applied to the bridge circuit until the start of measuring the bodily temperature after turning ON the power source switch and, upon starting the measurement, the thermistor 1 can be made self-heating so that its temperature reaches the predetermined value substantially equal to the bodily temperature. Therefore, the present invention has the advantage that one's temperature can accurately be taken in a short time and with small power consumption.

Further, the electronic clinical thermometer of the present invention is provided with pulse generating means which is formed by the AND gate AND and the pulse generator 12 for generating pulses when the ratio of increase of the temperature signal is higher than a predetermined value even if the temperature of the thermistor 1 reaches the predetermined

value substantially equal to the bodily temperature; and voltage control means which, when the pulse generating means yields the pulses, applies the transformation circuit 2 with such a voltage that makes the thermistor 1 self-heating. Therefore, even if the bodily temperature is appreciably higher than the aforementioned predetermined temperature, the thermistor 1 can be self-heated, in a short time, up to the temperature substantially equal to the bodily temperature. Accordingly, even if the bodily temperature is as high as, for example, $39^{\circ}C$ to $40^{\circ}C$, the bodily temperature can be measured in a short time.

It will be apparent that many modifications and variations may be effected without departing from the scope of the novel concepts of this invention.

0039460

CLAIMS:

1. An electronic clinical thermometer which has a bridge circuit having a heat sensitive element connected to at least one side thereof and detects one's temperature based on a temperature signal derived from the bridge circuit and corresponding to the temperature of the heat sensitive element, characterized by
first detecting means (3,4) for detecting whether or not the ratio of increase of the temperature signal from the bridge circuit (2) is higher than a certain value;
second detecting means (5) for detecting, based on the temperature signal from the bridge circuit (2), whether or not the temperature of the heat sensitive element (1) has reached a predetermined value substantially equal to the bodily temperature; and
voltage control means (7) for controlling a voltage to the bridge circuit (2) in accordance with the results of detection by the first and second detecting means (3, 4, 5).

2. An electronic clinical thermometer according to claim 1, characterized in that
the voltage control means (7) has such an arrangement that in the case where the ratio of increase of the temperature signal is higher than the certain value and the temperature of the heat sensitive element (1) is lower than the predetermined temperature substantially equal to the bodily temperature, it supplies the bridge circuit (2) with a voltage for making the heat sensitive element (1) self-heating.

0039460

3. An electronic clinical thermometer according to claim 1, characterized in that the voltage control means (13) is provided with pulse generating means (12) for generating pulses in the case where the ratio of increase of the temperature signal is higher than the certain value and the temperature of the heat sensitive element (1) is higher than the predetermined temperature substantially equal to the bodily temperature; and the voltage control means (13) has such an arrangement that in the case where the ratio of increase of the temperature signal is higher than the certain value and the temperature of the heat sensitive element (1) is lower than the predetermined temperature substantially equal to the bodily temperature and the pulse is applied from the pulse generating means (12) to the voltage control means (13), it supplies the bridge circuit (2) with a voltage for making the heat sensitive element (1) self-heating.

4. An electronic clinical thermometer according to claim 1, 2 or 3, characterized in that the first detecting means is comprised of a differentiation circuit (3) for differentiating the temperature signal from the bridge circuit (2) and a voltage comparator (4) for comparing the output signal from the differentiation circuit (3) with a reference voltage.

5. An electronic clinical thermometer according to claim 1, 2 or 3, characterized in that the second detecting means is formed by a voltage comparator (5) for comparing the temperature signal from the bridge circuit (2) with a voltage corresponding to a set temperature substantially equal to the bodily temperature.

6. An electronic clinical thermometer according
to claim 1, 2 or 3,
characterized in that
the heat sensitive element is a thermistor (1).

FIG.1

# FIG. 2A

TEMPERATURE (℃)

CLINICAL
TEMPERATURE

35℃

ROOM
TEMPERATURE

0

|←— 23SEC —→|

|←———— 65SEC ————→|

TIME

# FIG. 2B

VOLTAG (V)

vh

vl

0

t1   t2 t3

TIME

FIG.3

FIG.4A

FIG.4B